# EUROPÄISCHE PATENTSCHRIFT

(11) **EP 3 202 611 B1**
(45) Veröffentlichungstag und Bekanntmachung des Hinweises auf die Patenterteilung: **27.05.2020**
(21) Anmeldenummer: 17152340.0
(22) Anmeldetag: 20.01.2017
(51) Int. Cl.: B60L 13/03

(54) **VERFAHREN ZUM STEUERN DER BEWEGUNG EINER TRANSPORTEINHEIT**
METHOD FOR CONTROLLING THE MOVEMENT OF A TRANSPORT UNIT
PROCÉDÉ DE COMMANDE DU MOUVEMENT D'UNE UNITÉ DE TRANSPORT

(30) Priorität: 05.02.2016 AT 500742016
(43) Veröffentlichungstag der Anmeldung: 09.08.2017
(73) Patentinhaber: B&R Industrial Automation GmbH, 5142 Eggelsberg (AT)
(72) Erfinder: Radak, Alexander, 5323 Ebenau (AT); Huber, Stefan, 5020 Salzburg (AT)
(74) Vertreter: Patentanwälte Pinter & Weiss OG

(56) Entgegenhaltungen:
- JP-A- H0 837 707
- US-B2- 8 863 669

## Beschreibung

Die Erfindung betrifft ein Verfahren nach Anspruch 1.

Die Erfindung betrifft eine Fördereinrichtung in Form eines Langstatorlinearmotors, bei dem eine Vielzahl von Transporteinheiten entlang einer definierten Förderstrecke bewegt werden. Dabei sind entlang der Förderstrecke eine Vielzahl von Antriebsspulen angeordnet, die einzeln angesteuert werden können, um ein bewegtes Magnetfeld zu erzeugen. Ein bewegtes Magnetfeld wirkt mit Erregungsmagneten, in der Regel Permanentmagneten, an einer Transporteinheit zusammen, um die Transporteinheit gemäß dem Motorprinzip zu bewegen. Solche Fördereinrichtungen sind hinlänglich bekannt, beispielsweise aus der US 8,996,161 B2 und JP H08 37707 A.

Das Bewegungsprofil einer Transporteinheit wird dabei vorab geplant, um genau festzulegen, wie die Transporteinheit zu bewegen ist (z.B. Position, Geschwindigkeit, Beschleunigung). Bei einer Fördereinrichtung in Form eines Langstatorlinearmotors kann das durchaus komplex werden, da in der Regel sehr viele Transporteinheiten gleichzeitig bewegt werden und die Föderstrecke komplexe Geometrien, auch mit mehreren Streckenabschnitten, aufweisen kann.

Eine Fördereinrichtung besteht in der Regel aus Fördersegmenten, die jeweils eine Anzahl von Antriebsspulen aufweisen, die jeweils von einem zugeordneten Segmentregler geregelt werden. Die Fördersegmente werden nebeneinander angeordnet, um die Förderstrecke auszubilden. Ein Bewegungsprofil für eine Transporteinheit ist aber normalerweise über mehrere Fördersegmente hinweg geplant, damit muss ein Segmentregler auch nur einen Teil des Bewegungsprofils umsetzen. Man kann daher jedem Segmentregler nur den relevanten Teil des Bewegungsprofils zum Steuern der Transporteinheit durch das zugeordnete Fördersegment übergeben. Das ist aber sehr aufwendig, insbesondere bei sehr vielen Transporteinheiten. Abgesehen davon gibt es bei der Bewegung der Transporteinheit auch Vorgaben hinsichtlich der Stetigkeit der Bewegung. Demnach sind z.B. Beschleunigungssprünge unerwünscht und müssen sogar häufig vermieden werden. Das Planen von kurzen Bewegungsprofilabschnitten, die aneinandergehängt werden und die jeweils von verschiedenen Segmentreglern gesteuert werden, um in Summe das Bewegungsprofil zu ergeben, ist das aber ebenfalls sehr aufwendig und schwierig zu realisieren.

Die US 8,996,161 B2 beschreibt eine Reglerarchitektur, mit der eine beliebige Antriebsachse, insbesondere auch eine Antriebsachse einer Fördereinrichtung in Form eines Langstatorlinearmotors mit einer Reihe von Fördersegmenten, gesteuert werden kann. Dabei wird ein Bewegungsprofil für eine Antriebsachse (Transporteinheit) von einem Benutzer geplant und danach wird das Bewegungsprofil an eine Regelungseinheit übergeben, die das Bewegungsprofil in Steuerbefehle für die jeweiligen Antriebsspulen der Fördersegmente umgesetzt. Das Bewegungsprofil wird dabei über mehrere Fördersegmente hinweg geplant und muss somit nicht für einzelne Fördersegmente geplant werden. Die Regelungseinheit sorgt für die Umsetzung des Bewegungsprofils über die Fördersegmente hinweg. Die Planung des Bewegungsprofils erfolgt mittels Standardsoftware für beliebige Antriebsachsen, wobei bei der Planung auch die konkrete Umsetzung der Förderstrecke berücksichtigt wird. Das erstellte Bewegungsprofil für eine Transporteinheit ist damit an eine Umsetzung der Förderstrecke gebunden. Durch die Identifikation der Förderstrecke kann die Regelungseinheit das Bewegungsprofil dann auf der Förderstrecke in eine Bewegung der Transporteinheit umsetzen. Diese Art des Reglerarchitektur erleichtert zwar die Planung des Bewegungsprofils, weil keine spezielle Software mehr benötigt wird, ist aber trotzdem aufwendig, da jede Antriebsachse in der jeweiligen konkreten Umsetzung der Antriebsachse separat geplant werden muss.

Die US 8,863,669 B2 beschreibt beispielsweise eine Fördereinrichtung in Form eines Langstatorlinearmotors mit einer Steuerung der Bewegung der Transporteinheiten. Darin wird die Förderstrecke in sollwertbasierte und in grenzwertbasierte Zonen eingeteilt, die sich hinsichtlich des Aufbaus ihrer Reglerstruktur unterscheiden. Eine Transporteinheit wird in einer sollwertbasierten Zone anhand einer Sollwertvorgabe gesteuert wird und in einer grenzwertbasierten Zone mittels Vorgaben für die Endposition und Maximalwerten für die Geschwindigkeit und Beschleunigung gesteuert wird. Bei der grenzwertbasierten Steuerung werden diese Vorgaben in ein Bewegungsprofil umgewandelt, mit dem die Transporteinheit bewegt wird.

Es ist daher eine Aufgabe der gegenständlichen Erfindung, ein Verfahren anzugeben, mit dem die Bewegung einer Transporteinheit einer Fördereinrichtung einfacher und schneller geplant und gesteuert werden kann.

Diese Aufgabe wird mit den Merkmalen von Anspruch 1 gelöst. Durch die Verwendung von logischen Sektoren kann die Steuerung der Bewegung gänzlich von der zugrunde liegenden Hardware (den Fördersegmenten) gelöst werden. Die Planung der Bewegung kann damit auf abstrakten logischen Sektoren erfolgen, ebenso wie die Steuerung selbst. Der logische Sektor kann als einfache Linearachse betrachtet werden, auf der ein beliebiges Bewegungsprofil implementiert werden kann. Die Bewegung wird auf dem logischen Sektor durchgeführt, wo bei der jeweilige Sollwert auf die zugeordnete Fördersegmente der Hardware umgesetzt wird. Damit kann ein und derselbe logische Sektor auch auf einfache Weise für verschiedene Hardware eingesetzt werden. Das ermöglicht es auch, logische Sektoren mit zugeordneten Bewegungsprofilen vorab für einen beliebigen Prozess unabhängig von realer Hardware zu planen und nachher in einer realen Fördereinrichtung einzubinden.

Ein logischer Sektor kann einfach gehandhabt werden, wenn der logische Sektor einen Startpunkt, einen Endpunkt und eine Länge aufweist. Damit muss nur mit relativen Positionen, bezogen auf Start- oder Endpunkt, gerechnet werden, was einfach realisierbar ist. Dabei ist es vorteilhaft, wenn jede Position zwischen Startpunkt und Endpunkt des logischen Sektors einer eindeutigen Position auf einem zugeordneten Fördersegment entspricht. Damit wird die Zuordnung zwischen logischem Sektor und Fördersegment besonders einfach.

Besonders vorteilhaft ist es, dem logischen Sektor ein Bewegungsprofil zuzuordnen, das von jeder Transporteinheit auf dem logischen Sektor abgefahren wird. Damit reicht ein Bewegungsprofil für alle Transporteinheiten. Alternativ können dem logischen Sektor verschiedene Bewegungsprofile für verschiedene Transporteinheiten zugeordnet werden.

Auch Weichenfahrten auf der realen Hardware können mit den logischen Sektoren einfach berücksichtigt werden, wenn die Zuordnung zwischen dem logischen Sektor und einem Fördersegment auch Information über eine notwendige Weichenstellung enthält. Über die Weichenfahrt muss sich der logische Sektor keine Gedanken machen. Ebenso kann das Bewegungsprofil auf dem logischen Sektor ohne Rücksicht auf eine Weiche geplant werden. Die Umsetzung erfolgt dann erst auf der realen Hardware.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 ein Ausführungsbeispiel einer Fördereinrichtung mit Fördersegmenten und mehren Transporteinheiten,
Fig.2 einer Förderstrecke zugewiesene logische Sektoren,
Fig.3 einen durch einen logischen Sektor definierten Pfad entlang der Förderstrecke und
Fig.4 die Zuordnung zwischen logischem Sektor und realer Hardware.

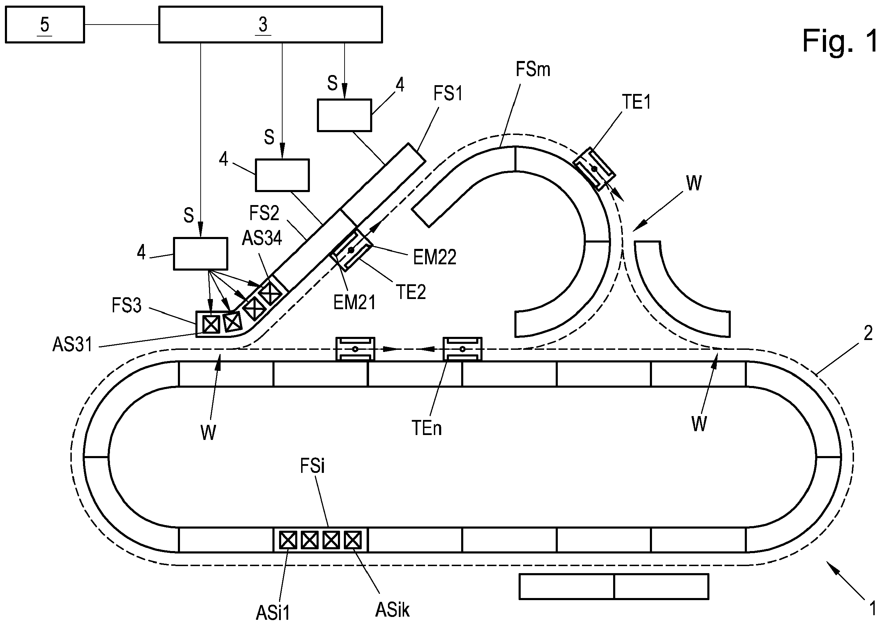

Die Erfindung betrifft eine Fördereinrichtung 1 in Form eines Langstatorlinearmotors, wobei eine Vielzahl von Transporteinheiten TEi entlang einer Förderstrecke 2 der Fördereinrichtung 1 bewegt werden. In Fig.1 ist beispielhaft ein beliebiger Aufbau einer Fördereinrichtung 1 mit einer Förderstrecke 2 (angedeutet durch die strichlierte Linie) dargestellt. Die Fördereinrichtung 1 ist als Langstatorlinearmotor ausgeführt und es sind eine Vielzahl von Transporteinheiten TEi, i=1, ..., x vorgesehen, die entlang der Förderstrecke 2 bewegt werden können. Die Förderstrecke 2 wird im Wesentlichen durch den Langstator des Langstatorlinearmotors 1 vorgegeben. Im gezeigten Ausführungsbeispiel sind eine Reihe von Fördersegmente FSi, i=1, ..., y vorgesehen, die die Bahn der Transporteinheiten TEi, also die Förderstrecke 2, definieren. Die Fördersegmente FSi bilden dabei einen Teil des Langstators des Langstatorlinearmotors. Die Fördersegmente FSi sind in einer geeigneten Konstruktion ortsfest angeordnet und bilden in der Regel auch Führungselemente aus, entlang denen die Transporteinheiten TEi geführt werden können. Einzelne Fördersegmente FSi, wie beispielsweise FS1 und FSM in Fig.1, können sich zum Teil auch überlappen, insbesondere an Stellen der Förderstrecke 2 an der ein Übergang von einem Streckenabschnitt auf einen anderen Streckenabschnitt stattfindet. Es kann auch vorgesehen sein, dass abschnittsweise an beiden Seiten der Förderstrecke 2 Fördersegmente FSi angeordnet sind. Es können auch Weichen W vorgesehen sein, um Übergänge zwischen verschiedenen Streckenabschnitten zu realisieren. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann.

Jedes Fördersegment FSi umfasst eine Anzahl k von Antriebsspulen ASij, j=1, ..., k, wobei die Anzahl k nicht bei jedem Fördersegmente FSi gleich sein muss. In Fig.1 sind der Übersicht halber nur Antriebsspulen ASij einiger Fördersegmente FSi dargestellt. Jede Transporteinheit TEi umfasst eine Anzahl von Erregungsmagnete EMij, j=1, ..., l, vorzugsweise an beiden Seiten (bezogen auf die Förderrichtung, die durch die Pfeile an den Transporteinheiten TEi angedeutet ist) der Transporteinheit TEi. Die Antriebsspulen ASij wirken im Betrieb der Fördereinrichtung 1 in bekannter Weise nach dem Motorprinzip mit den Erregungsmagneten EMij der Transporteinheiten TEi zusammen. Werden die Antriebsspulen ASij im Bereich einer Transporteinheit TEi mit einem Spulenstrom bestromt, entsteht ein magnetischer Fluss der in Zusammenwirken mit den Erregungsmagneten EMij eine Kraft auf die Transporteinheit TEi ausübt. Diese Kraft kann je nach Spulenstrom bekanntermaßen eine vortriebskraftbildende und eine seitenkraftbildende Kraftkomponenten umfassen. Die vortriebskraftbildende Kraftkomponente dient im Wesentlichen der Bewegung der Transporteinheit TEi und die seitenkraftbildende Kraftkomponente kann zur Führung der Transporteinheit TEi, aber auch zur Festlegung der Bahn der Transporteinheit TEi in einer Weiche W genutzt werden. Auf diese Weise kann jede Transporteinheit TEi einzeln und unabhängig voneinander entlang der Förderstrecke 2 bewegt werden, indem die Antriebsspulen ASij im Bereich jeder Transporteinheit TEi gemäß der durchzuführenden Bewegung mit einem entsprechenden Spulenstrom bestromt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEi, die Fördersegmente FSi, die Antriebsspulen ASij, die Erregungsmagnete EMij, usw. konstruktiv konkret ausgestaltet sind, weshalb auch darauf nicht näher eingegangen wird.

Um die Bewegung der einzelnen Transporteinheiten TEi zu steuern ist eine Transporteinheitenregelung 3 vorgesehen, in der die Sollwerte S für die Bewegung der Transporteinheiten TEi, in der Regel Positionen pᵢ, oder gleichwertig auch Geschwindigkeiten vᵢ oder Vortriebskräfte, generiert werden. Selbstverständlich können gleichwertig auch mehrere Transporteinheitenregelungen 3 vorgesehen sein, die jeweils einem Teil der Fördereinrichtung 1, z.B. einem Streckenabschnitt aus mehreren Fördersegmenten FSi, zugeordnet sind und die Bewegung der Transporteinheiten TEi auf diesem Teil kontrollieren. Zusätzlich können noch Segmentregelungseinheiten 4 vorgesehen sein, die einem Fördersegment FSi (oder auch mehreren Födersegmenten FSi oder auch einem Teil eines Fördersegments FSi) zugeordnet sind und die die Sollwertvorgaben der zugehörigen Transporteinheitenregelung 3 für eine Transporteinheit TEi in Stellgrößen, wie beispielsweise in Spulenströme, für die Antriebsspulen ASij des Fördersegments FSi umsetzen. Die Segmentregelungseinheiten 4 könnten aber auch in einer Transporteinheitenregelung 3 implementiert sein. In einer Segmentregelungseinheit 4 ist demnach ein geeigneter Regler implementiert, der die Sollwertvorgabe durch die Sollwerte S in eine geeignete Stellgröße für den Antrieb, beispielsweise in einen Spulenstrom, umsetzt.

Der gewünschte Weg der Transporteinheiten TEi entlang der Förderstrecke 2 kann auch durch eine übergeordnete Fördereinrichtungsregelung 5 vorgegeben werden, in der beispielsweise eine Routenberechnung (welchen Weg soll eine Transporteinheit TEi nehmen), eine Weichenarbitrierung (welche Transporteinheit TEi darf in eine Weiche einfahren), eine Deadlockvermeidung (z.B. blockieren sich zwei Transporteinheiten TEi gegenseitig), usw. stattfinden kann, um die Transporteinheiten TEi auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEi kann in der Transporteinheitenregelung 3 in Sollwertvorgaben für die Transporteinheiten TEi umgesetzt werden.

Die Bewegung der Transporteinheiten TEi entlang der Förderstrecke 2 ist dabei im Vorfeld zu planen. Beispielsweise kann es Streckenabschnitte der Fördereinrichtung 1 geben, wo Fertigungsprozesse, Handhabungsprozesse, Montageprozesse und ähnliches an einem Bauteil, der mit einer Transporteinheit TEi bewegt wird, durchgeführt werden. Die Transporteinheit TEi muss dazu in diesem Streckenabschnitt mit einen vorgegebenen Bewegungsprofil (z.B. Position p, Geschwindigkeit v, Beschleunigung a) bewegt werden. Es kann auch Streckenabschnitte geben, in denen die Transporteinheiten TEi schnellstmöglich zu bewegen sind oder auf andere Transporteinheiten TEi warten müssen oder zu einer anderen Transporteinheit synchronisiert werden muss. Natürlich sind noch viele weitere Vorgaben für ein Bewegungsprofil denkbar. Daneben kann eine bestimmte Position der Förderstrecke 2, insbesondere auf komplexen Förderstrecken 2 mit vielen Streckenabschnitten und Weichen W, häufig auch auf verschiedenen Wegen erreicht werden. All das macht die Bewegungsplanung für eine Transporteinheit TEi einer Fördereinrichtung 1 zu einer komplexen Aufgabe. Um das zu vereinfachen wird erfindungsgemäß wie folgt vorgegangen.

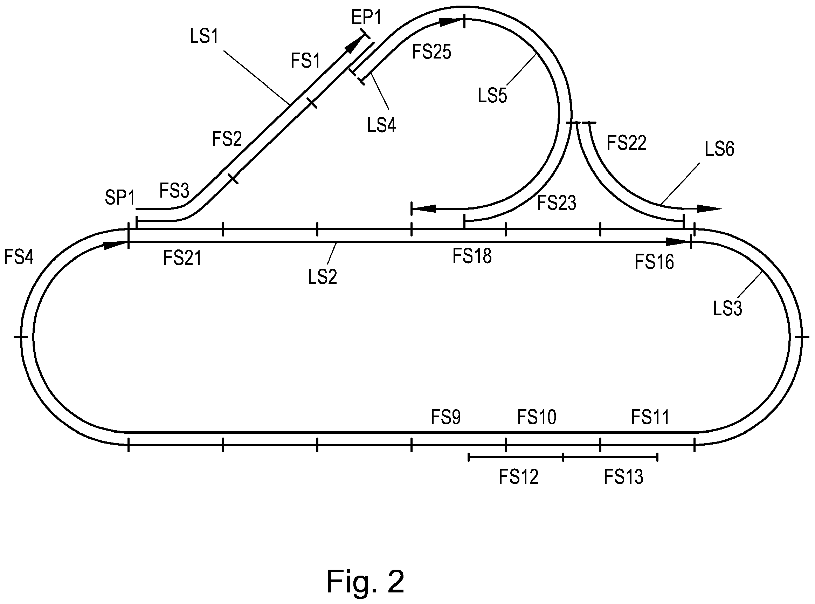

Entlang der durch die Fördereinrichtung 1 vorgegebenen Förderstrecke 2 werden logische Sektoren LSi, i=1, ..., z definiert. In Fig.2 ist die Förderstrecke 2 des Ausführungsbeispiels nach Fig.1 mit fünfundzwanzig Fördersegmenten FS1 ... FS25 dargestellt, wobei beispielhaft einige logische Sektoren LSi dargestellt wurden.

Dabei ist es unerheblich, ob sich ein logischer Sektor LSi aus mehreren Fördersegmenten FSi zusammensetzt oder genau einem Fördersegment FSi entspricht. Ein logischer Sektor LSi kann auch Teile von Fördersegmenten FSi umfassen. Die logischen Sektoren LSi werden unabhängig vom jeweiligen Hardwareaufbau der Förderstrecke 2, also unabhängig von der Anordnung der Fördersegmente FSi geplant. Die logischen Sektoren LSi decken gemeinsam alle Punkte der Förderstrecke 2 ab, die von den Transporteinheiten TEi erreicht werden sollen. Dabei müssen durch die logischen Sektoren LSi nicht zwingend geschlossene Bahnen gebildet werden. Fallen der Startpunkt und der Endpunkt eines logischen Sektors LSi aber zusammen, dann ergibt sich ein geschlossener logischer Sektor LSi.

Ein logischer Sektor LSi kann dabei auch auf einem anderen logischen Sektor definiert werden. Damit kann beispielsweise ein logischer Sektor LSi in mehrere logische Sektoren geteilt werden, oder aus mehreren logischen Sektoren zusammengesetzt werden.

Ein logischer Sektor LSi wird mit einem Startpunkt SPi und einem Endpunkt EPi und einer Länge L1 definiert, um logische Sektoren LSi einfach aneinanderreihen zu können, um ganze Streckenabschnitte oder Förderstrecken 2 logischen Sektoren LSi zuweisen zu können. Ein logischer Sektor LSi kann daher durch Vorgabe des Startpunktes SPi und Endpunktes EPi oder durch Vorgabe des Startpunkte SPi oder Endpunktes EPi und der Länge Li eindeutig festgelegt werden. Aus dem Startpunkt SPi und Endpunkt EPi ergibt sich auch eine Förderrichtung, wie in Fig.2 durch die Pfeile angedeutet. In der Planung ist es vorteilhaft, aber nicht zwingend, wenn der Startpunkt SPi und der Endpunkt EPi des logischen Sektors LSi mit dem Start- oder Endpunkt von Fördersegmenten FSi übereinstimmen.

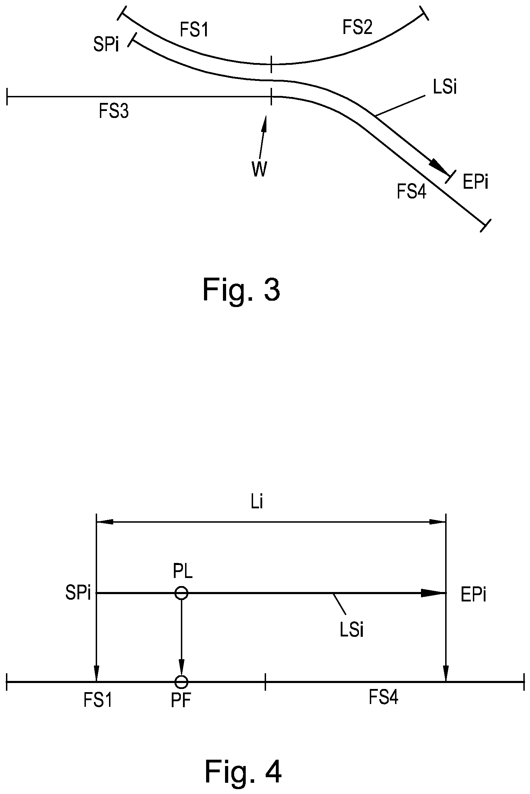

Ein logischer Sektor LSi definiert folglich einen abstrakten Pfad entlang der Förderstrecke 2 und ist unabhängig von der Hardware (Anzahl und Anordnung der Fördersegmente FSi). Ein logischer Sektor LSi kann dabei auch über Weichen W der Fördereinrichtung 1 hinweg geplant werden, wie in Fig.3 dargestellt. Hierbei sind zwei Fördersegmente FS1, FS2 vorgesehen, die einen ersten Streckenabschnitt bilden und zwei weitere Fördersegmente FS3, FS4, die einen zweiten Streckenabschnitt bilden. Die beiden Streckenabschnitte sind durch eine Weiche W miteinander verbunden, d.h. dass eine Transporteinheit TEi an der Weiche W entweder entlang des ersten oder zweiten Streckenabschnittes bewegt werden kann. Der logische Sektor LSi umfasst einen Teil des Fördersegments FS1 des ersten Streckenabschnitts und einen Teil des Fördersegments FS4 des zweiten Streckenabschnitts. Damit findet entlang des logischen Sektors LSi ein Wechsel des Streckenabschnitts statt.

Auf dem logischen Sektor LSi kann dann unabhängig von der konkreten Hardware (Fördersegmente FSi)ein beliebiges Bewegungsprofil programmiert werden. Ein einfaches Bewegungsprofil könnte beispielsweise eine Geschwindigkeitsrampe, oder eine konstante Geschwindigkeit sein. Es kann aber auch nur ein Endpunkt der Bewegung, z.B. der Endpunkt des logischen Sektors LSi, vorgegeben werden, der mit einem beliebigen Bewegungsprofil angefahren werden soll. Dabei können auch komplexe Bewegungen, an der auch mehr als eine Transporteinheit TEi beteiligt sein können, definiert werden. Beispielsweise können in einem logischen Sektor LSi mehrere Transporteinheiten TEi gemeinsam gemäß einer vorgegebenen Bewegung bewegt werden.

Für jede Transporteinheit TEi die entlang des logischen Sektors LSi bewegt wird, wird ein Bewegungsprofil festgelegt. Dabei können für verschiedene Transporteinheiten TEi auch verschiedene Bewegungsprofile festgelegt werden. Es könne aber für Transporteinheiten TEi auch gleiche Bewegungsprofile festgelegt werden. Das kann auch realisiert werden, in dem für einen logischen Sektor LSi ein Bewegungsprofil geplant wird und dieses Bewegungsprofil einer Transporteinheit TEi, die in den logischen Sektor LSi fährt, zugewiesen wird und das Bewegungsprofil dann abfährt. Damit wäre das Bewegungsprofil des logischen Sektors LSi unabhängig von einer konkreten Transporteinheit TEi. Dabei können natürlich auf einem logischen Sektor LSi verschiedene Bewegungsprofile vorgegeben werden, von denen dann eines in Abhängigkeit von einem vorgegebenen Auswahlkriterium einer Transporteinheit TEi zugewiesen wird. Beispielsweise könnte ein Bewegungsprofil für eine leere und eine beladene Transporteinheit TEi definiert sein, um mit dem logischen Sektor LSi eine Kurvenfahrt zu realisieren, wobei in der Kurve eine beladene Transporteinheit TEi langsamer bewegt wird, als eine leere.

Es können aber auch vorab logische Sektoren LSi unabhängig von einer Hardware erstellt und gespeichert werden. Beispielsweise wird ein logischer Sektor LSi für das Abfüllen von Flaschen erstellt. Dabei werden Flaschen entlang eines bestimmten Bewegungsprofils durch den logischen Sektor LSi bewegt. Solche vordefinierte logischen Sektoren LSi können dann ebenfalls verwendet werden, um der Förderstrecke 2 logische Sektoren LSi zuzuweisen. Beispielsweise könnte in Fig.2 der logische Sektor LS1 als Flaschenabfüllung definiert werden. Dazu kann der vorab erstellt logische Sektor zum Flaschenabfüllen aus einer Sektorbibliothek aufgerufen werden und in der Sektorenplanung eingefügt werden. Damit kann derselbe vordefinierte logische Sektor natürlich auch mehrmals in einer Planung verwendet werden. Beispielsweise könnte der logische Sektor LS2 in Fig.2 ebenso als gleiche Flaschenabfüllung geplant werden.

Auf diese Weise können einem Teil der Förderstrecke 2 einer Fördereinrichtung 1 oder einer ganzen Förderstrecke 2 einer Fördereinrichtung 1 logische Sektoren LSi zugewiesen werden, ohne auf die konkrete Hardware der Fördereinrichtung 1 Rücksicht nehmen zu müssen.

Logische Sektoren LSi könnten sogar dynamisch während des Betriebs einer Fördereinrichtung 1 geplant werden. Es kann beispielsweise gefordert sein, eine Transporteinheit TEi von einem Punkt P1 auf der Förderstrecke 2 zu einem anderen Punkt P2 auf der Förderstrecke 2 zu bewegen. Es kann nun eine Bahnplanung implementiert sein, die einen Weg von Punkt P1 zu Punkt P2 sucht. Die Bahnplanung findet auf Basis der Fördersegmente FSi statt. Der gefundene Weg von Punkt P1 zu Punkt P2 wird dann als logischer Sektor LSi definiert. Zur Bewegung der Transporteinheit TEi wird dann ein Bewegungsprofil für diesen logischen Sektor LSi geplant bzw. wird ein geeignetes Bewegungsprofil, z.B. konstante Geschwindigkeitsfahrt, aus einer Bibliothek entnommen und dem logischen Sektor LSi zugewiesen.

Die Steuerung der Bewegung einer Transporteinheit TEi findet dann auf Basis der logischen Sektoren LSi statt, d.h. ebenfalls unabhängig von der zugrunde liegenden Hardware der Fördereinrichtung 1. D.h. es wird in einer Regelungseinheit das auf dem logischen Sektor LSi für eine Transporteinheit TEi definierte Bewegungsprofil abgefahren, um die Sollwerte S für die Bewegung der Transporteinheit TEi zu erhalten. Für jede Transporteinheit TEi, die in den logischen Sektor LSi einfährt, wird das zugeordnete Bewegungsprofil abgefahren. Die Sollwerte S sind dabei noch bezogen auf den logischen Sektor LSi, beispielsweise in der Form Position auf dem logischen Sektor LSi bezogen auf den Startpunkt SPi des logischen Sektors LSi, also eine Position auf dem Bereich [SPi, SPi + Li].

Für die Steuerung der Bewegung ist demnach keine Kenntnis der zugrunde liegenden Hardware notwendig. Die Steuerung erfolgt auf einem abstrakten logischen Sektor LSi gemäß einem definierten Bewegungsprofil. Das Bewegungsprofil wird dabei vorzugsweise in Form von Positionssollwerten abgefahren. Der logische Sektor kann dabei als einfache Linearachse angesehen werden. Die ermittelten Sollwerte S werden dann über die dahinter liegende Zuordnung zu Fördersegmenten FSi in Sollwertvorgaben für die Hardware übersetzt. Es ist daher möglich, eine in Form einer Reihe von logischen Sektoren LSi definierte Bewegung auf unterschiedlicher Hardware anzuwenden. Die definierte Bewegung muss dabei nicht geändert werden, es muss lediglich die Zuordnung zwischen logischen Sektoren LSi und der Hardware neu erstellt werden. Das kann sehr einfach über eine grafische Benutzeroberfläche erfolgen, auf der die konkrete Hardware dargestellt wird, über die dann die logischen Sektoren LSi überlagert werden. Daraus ergibt sich die Zuordnung automatisch.

Die Umsetzung des auf dem logischen Sektor LSi abgefahrenen Bewegungsprofils auf die konkrete Hardware der Fördereinrichtung 1 erfolgt dadurch, dass zu jedem logischen Sektor LSi die zugehörigen Fördersegmente FSi gespeichert sind. Ein logischer Sektor LSi wird daher einem, einem Teil oder mehreren Fördersegmenten (was auch Teile von Fördersegmenten FSi umfasst) zugewiesen. Weiters ist jede Position PL des logischen Sektors LSi eindeutig einer Position PF auf dem oder den zugeordneten Fördersegment(en) FSi zugeordnet. Falls auf beiden Seiten (in Förderrichtung gesehen) der Förderstrecke 2 Fördersegmente angeordnet sind, wie beispielsweise im Bereich einer Weiche W oder bei den Fördersegmenten FS9 bis FS13 in Fig.2, dann wird die Position PL des logischen Sektors LSi natürlich den Fördersegmenten FSi an beiden Seiten zugeordnet. Somit kann jede Position PL auf dem logischen Sektor LSi einer Position PF auf einem bestimmten Fördersegment FSi, oder mehreren Fördersegmenten FSi, zugeordnet werden, wie in Fig.4 dargestellt ist. Der Sollwert S an der Position PL auf dem logischen Sektor LSi kann daher in einen Sollwert an der Position PF auf der realen Hardware umgesetzt werden. Diese Zuordnung kann z.B. einfach über die bekannte Länge Li des logischen Sektors LSi und der bekannten Länge der zugeordneten Hardware, also des oder der Fördersegmente FSi, erfolgen. Vorzugsweise ist die Länge der einem logischen Sektor LSi zugeordneten Fördersegmente FSi gleich der Länge Li des logischen Sektors LSi, da das die Zuordnung erleichtert.

Sind dem logischen Sektor LSi beispielsweise zwei Fördersegmente FSi mit einer Länge von jeweils 500mm zugeordnet, dann wird für die Länge Li des logischen Sektors LSi vorzugsweise eine Länge 1000 (ohne Einheit, da unabhängig von der Hardware) angenommen. Eine Position PL auf dem logischen Sektor LSi ist so eindeutig einer Position auf den Fördersegmenten FSi zuordenbar. Eine Position PL im Bereich von [0, 500] auf dem logischen Sektor LSi wäre dann einer Position PF auf dem ersten Fördersegment FS1 im Bereich von [0, 500] zugeordnet. Eine Position PL im Bereich von [500, 1000] auf diesem logischen Sektor LSi wäre dann einer Position PF auf dem zweiten Fördersegment FS2 im Bereich von [0, 500] zugeordnet. Wird beispielsweise an der Position PL eine Geschwindigkeit als Sollwert S vorgegeben, dann ergibt das die Vorgabe der Geschwindigkeit an der Position PF des zugeordneten Fördersegments FSi. Das Fördersegment FSi, bzw. die zugeordnete Segmentregelungseinheit 4, kann die Position PF gewissen Antriebsspulen ASij zuordnen, die dann angesteuert werden, um den neuen Sollwert S einzuregeln.

Bei der Umsetzung auf die reale Hardware kann in der Zuordnung von logischem Sektor LSi auf Fördersegmente FSi auch eine Weichenauslösung hinterlegt sein, um eine mögliche Weiche W im Pfad des logischen Sektors LSi richtig zu schalten. Im Beispiel nach Fig.3 wäre damit in der Zuordnung zwischen dem logischen Sektor LSi und den Fördersegmenten FS1, FS4 auch die Information enthalten, dass die Weiche W auf das Fördersegment FS4 umzuschalten ist. Die Weiche W muss nur rechtzeitig geschaltet werden, sodass die Transporteinheit TEi dem vorgesehen Pfad entlang der Förderstrecke 2 folgt. Den Zeitpunkt der Weichenschaltung kann z.B. die Segmentregelungseinheit 4 festlegen, z.B. wenn die Transporteinheit TEi in den logischen Sektor LSi einfährt und die Weiche W nicht durch eine andere Transporteinheit besetzt ist. Damit muss sich der Anwender beim Planen der logischen Sektoren LSi auch keine Gedanken über allfällig notwendige Weichenstellungen machen. Bei Zuweisen eines logischen Sektors LSi zur Förderstrecke 2 wird erkannt, dass eine Weiche W vorhanden ist und wie die Weiche zu stellen ist.

Die Länge Li eines logischen Sektors LSi könnte bei der Verwendung eines vordefinierten logischen Sektors LSi bei der Planung auch verändert werden, also gestaucht oder verlängert werden. Allerdings ist dabei zu beachten, dass sich dann auch ein dazu definiertes Bewegungsprofil verändern kann. Wird ein logischer Sektor LSi gestreckt, dann wird beispielsweise auch ein darauf definiertes Bewegungsprofil gestreckt. Soll der logische Sektor LSi in einer bestimmten Zeit durchfahren werden, dann müsste folglich die Geschwindigkeit erhöht werden, um den nun längeren logischen Sektor LSi in derselben Zeit zu durchfahren. Solche Anpassungen können bei der Planung aber einfach berücksichtigt werden.

Zu jeden Taktschritt der Sollwertvorgabe, der mit dem Taktschritt der Regelung übereinstimmen kann, wird für eine Transporteinheit TEi auf einem logischen Sektor LSi aus dem zugehörigen definierten Bewegungsprofil ein neuer Sollwert S berechnet. Über die Zuordnung zwischen logischen Segment LSi und Fördersegment FSi ist bekannt, wo sich die Transporteinheit TEi auf der realen Fördereinrichtung 1 befindet. Damit kann der zugeordneten Segmentregelungseinheit 4 des Fördersegments FSi, bzw. der Fördersegmente FSi, der aktuelle Sollwert S für das Fördersegment FSi übergeben werden. Der Sollwert für das Fördersegment FSi wird dann von der Segmentregelungseinheit 4 eingeregelt.

Eine Umsetzung der Erfindung könnte wie folgt ablaufen:
Zuerst wird mit vorgegebenen Fördersegmenten FSi eine Förderstrecke 2 geplant, wie z.B. in Fig.1 dargestellt, oder es liegt eine geplante Förderstrecke 2 vor. Das erfolgt vorzugsweise auf einer grafischen Benutzeroberfläche. Zumindest einem Teil der Förderstrecke 2 wird dann eine Anzahl logischer Sektoren LSi zugewiesen, wobei die Zuordnung zwischen den logischen Sektoren LSi und den Fördersegmenten FSi gespeichert wird. Das Zuweisen der logischen Sektoren LSi erfolgt vorzugsweise ebenfalls auf einer grafischen Benutzeroberfläche. Dabei wird zumindest ein logischer Sektor LSi erstellt. Jedem logischen Sektor LSi ist für die Transporteinheiten TEi, die entlang des logischen Sektors LSi bewegt werden sollen, ein Bewegungsprofil zugeordnet. Die Steuerung der Bewegung einer Transporteinheit TEi erfolgt auf den logischen Sektoren LSi, indem in jedem Taktschritt aus dem zugehörigen Bewegungsprofil für den logischen Sektor LSi ein Sollwert S bestimmt wird. Der Sollwert S wird über die Zuordnung zu den Fördersegmenten FSi, auf der Fördereinrichtung 1 eingeregelt.

## Patentansprüche

1. Verfahren zum Steuern der Bewegung einer Transporteinheit (TEi) einer Fördereinrichtung (1) in Form eines Langstatorlinearmotors, wobei die Transporteinheit (TEi) entlang einer Förderstrecke (2) bewegt wird und die Förderstrecke (2) aus einer Anzahl von Fördersegmenten (FSi) zusammengesetzt ist, wobei zumindest einem Teil der Förderstrecke (2), entlang dem die Transporteinheit (TEi) bewegt wird, zumindest ein logischer Sektor (LSi) zugewiesen wird, wobei der zumindest eine logische Sektor (LSi) jeweils einem oder mehreren Fördersegmenten (FSi), oder Teilen davon, zugeordnet wird, wobei dem zumindest einen logischen Sektor (LSi) ein Bewegungsprofil für die Transporteinheit (TEi) zugeordnet wird, wobei die Transporteinheit (TEi) gemäß dem vorgegebenen Bewegungsprofilen entlang des zumindest einen logischen Sektors (LSi) bewegt wird und dabei in jedem Taktschritt der Sollwertvorgabe ein neuer Sollwert (S) der Bewegung ermittelt wird und wobei der Sollwert (S) über die Zuordnung zu einem oder mehreren Fördersegmenten (FSi), oder Teilen davon, dem oder den zugeordneten Fördersegment(en) (FSi) zum Einregeln übergeben wird, **dadurch gekennzeichnet, dass** der zumindest eine logische Sektor (LSi) vom Hardwareaufbau der Förderstrecke (2) unabhängig ist.

2. Verfahren nach Anspruch 1, **dadurch gekennzeichnet, dass** der logische Sektor (LSi) einen Startpunkt (SPi), einen Endpunkt (EPi) und eine Länge (Li) aufweist.

3. Verfahren nach Anspruch 2, **dadurch gekennzeichnet, dass** jede Position (PL) zwischen Startpunkt (SPi) und Endpunkt (EPi) des logischen Sektors (LSi) einer eindeutigen Position (PF) auf einem zugeordneten Fördersegment (FSi), oder mehreren zugeordneten Fördersegmenten (FSi), entspricht.

4. Verfahren nach Anspruch 1, **dadurch gekennzeichnet, dass** dem logischen Sektor (LSi) ein Bewegungsprofil zugeordnet wird, das von jeder Transporteinheit (TEi) auf dem logischen Sektor (LSi) abgefahren wird.

5. Verfahren nach Anspruch 1, **dadurch gekennzeichnet, dass** dem logischen Sektor (LSi) verschiedene Bewegungsprofile für verschiedene Transporteinheiten (TEi) zugeordnet werden.

6. Verfahren nach Anspruch 1, **dadurch gekennzeichnet, dass** die Zuordnung zwischen dem logischen Sektor (LSi) und einem Fördersegment (FSi) auch Information über eine notwendige Weichenstellung einer Weiche (W) enthält.

## Claims

1. Method for controlling the movement of a transportation unit (TEi) of a conveying device (1) in the form of a long-stator linear motor, wherein the transportation unit (TEi) is moved along a conveying line (2) and the conveying line (2) is composed of a number of conveying segments (FSi), wherein at least a part of the conveying line (2), along which the transportation unit (TEi) is moved, is assigned at least one logical sector (LSi), wherein the at least one logical sector (LSi) is allocated to one or more conveying segments (FSi) or parts thereof, wherein a movement profile for the transportation unit (TEi) is allocated to the at least one logical sector (LSi), wherein the transportation unit (TEi) is moved in accordance with the specified movement profile along the at least one logical sector (LSi) and at the same time a new setpoint (S) of the movement is ascertained in each cycle step of the setpoint selection, and wherein the setpoint (S) is transferred via the allocation to one or more conveying segments (FSi), or parts thereof, to the allocated conveying segment(s) (FSi) for adjustment, **characterized in that** the at least one logical sector (LSi) is independent from the hardware setup of the conveying line (2) .

2. The method according to claim 1, **characterized in that** the logical sector (LSi) comprises a starting point (SPi), an end point (EPi), and a length (Li).

3. The method according to claim 2, **characterized in that** any position (PL) between the starting point (SPi) and end point (EPi) of the logical sector (LSi) corresponds to a unique position (PF) on an allocated conveying segment (FSi) or a number of allocated conveying segments (FSi).

4. The method according to claim 1, **characterized in that** the logical sector (LSi) is allocated a movement profile, which is run through by each transportation unit (TEi) on the logical sector (LSi).

5. The method according to claim 1, **characterized in that** the logical sector (LSi) is allocated different movement profiles for different transportation units (TEi).

6. The method according to claim 1, **characterized in that** the allocation between the logical sector (LSi) and a conveying segment (FSi) also contains information regarding a necessary switch position of a switch (W).

## Revendications

1. Procédé de commande du mouvement d'une unité de transport (TEi) d'un dispositif de transport (1) sous la forme d'un moteur linéaire à stator long, dans lequel l'unité de transport (TEi) est déplacée le long d'une ligne de transport (2) et la ligne de transport (2) est composée d'un certain nombre de segments de transport (FSi), dans lequel au moins un secteur logique (LSi) est attribué à au moins une partie de la ligne de transport (2) le long de laquelle l'unité de transport (TEi) est déplacée, dans lequel l'au moins un secteur logique (LSi) est respectivement attribué à un ou plusieurs segments de transport (FSi), ou des parties de ceux-ci, dans lequel un profil de mouvement de l'unité de transport (TEi) est associé à au moins un secteur logique (LSi), dans lequel l'unité de transport (TEi) est déplacée le long de l'au moins un secteur logique (LSi) selon le profil de mouvement prédéfini et une nouvelle valeur de consigne (S) du mouvement est déterminée à chaque pas d'horloge de la spécification de valeur de consigne, et dans lequel la valeur de consigne (S) est transférée par association à un ou plusieurs segments de transport (FSi), ou à des parties de ceux-ci, à un ou plusieurs segments de transport (FSi) associés pour le réglage, **caractérisé en ce que** l'au moins un secteur logique (LSi) est indépendant de la structure matérielle de la ligne de transport (2).

2. Procédé selon la revendication 1, **caractérisé en ce que** le secteur logique (LSi) présente un point initial (SPi), un point final (EPi) et une longueur (Li).

3. Procédé selon la revendication 2, **caractérisé en ce que** chaque position (PL) entre le point initial (SPi) et le point final (EPi) du secteur logique (LSi) correspond à une position unique (PF) sur un segment de transport (FSi) associé, ou à plusieurs segments de transport (FSi) associés.

4. Procédé selon la revendication 1, **caractérisé en ce qu'**un profil de mouvement est associé au secteur logique (LSi), lequel profil de mouvement est parcouru par chaque unité de transport (TEi) sur le secteur logique (LSi).

5. Procédé selon la revendication 1, **caractérisé en ce que** différents profils de mouvement de différentes unités de transport (TEi) sont associés au secteur logique (LSi).

6. Procédé selon la revendication 1, **caractérisé en ce que** l'association entre le secteur logique (LSi) et un segment de transport (FSi) renferme également des informations sur un réglage nécessaire d'un commutateur (W).
